# EUROPEAN PATENT APPLICATION

(11) **EP 2 713 623 A2**
(43) Date of publication of application: **02.04.2014**
(21) Application number: 13169275.8
(22) Date of filing: 24.05.2013
(51) Int. Cl.: H04N 21/414, H04N 21/45

(54) **Communication control method**

(30) Priority: 28.09.2012 JP 2012216692
(71) Applicant: Kabushiki Kaisha Toshiba, Tokyo 105-8001 (JP)
(72) Inventor: Numano, Fujihito, Tokyo, 105-8001 (JP)
(74) Representative: Henkel, Breuer & Partner

(57) **Abstract**

According to one embodiment, a communication control method of an electronic device (101) which comprises a communication control function to communicate by at least sound through a network and which is configured to a simultaneously performed additional process, characterized in that when the simultaneously performed additional process is performed with the communication, at least one of the image quality of a video signal and the sound quality of an audio signal attached to the communication is reduced to less than a standard value as required after a prior notice.

## Description

Embodiments described herein relate generally to a communication control method operable simultaneously with an electronic device such as a recorder/reproducer.

Along with the spread of the Internet and highspeed communication networks, a communication function (IP telephone) capable of audio communication using Internet Protocol (IP) or communication including images (moving images) is also available in a television receiver (hereinafter abbreviated as a television) mainly designed for the viewing of television broadcast programs or in a recorder/reproducer which is connected to a monitor device and which can thereby record and reproduce programs. Televisions having recording/reproduction functions capable of recording and reproducing programs are also widespread.

When a television or a recorder/reproducer records, reproduces or dubs a program (i.e., makes a copy of the program), image data and audio data have to be compressed or expanded, which increases the usage rate of the system resource.

For example, if a High-Definition (HD) image of high image quality is recorded and concurrently communications accompanying reproduction of a video are performed with an IP telephone (in which case, a resource usage conflict occurs), a restriction may be imposed on either the recording or the communications.

In the meantime, if the system resource is increased, this may result in an increase in the manufacturing cost. In addition, during normal use, a significant portion of the system resource may become redundant.

Accordingly, an object of the present invention is to provide a communication control method which keeps the cost as low as possible and which enables both communications accompanying the reproduction of a video and the recording of a program.

An object of the invention is to provide an electronic apparatus and an account creation program.

A general architecture that implements the various features of the embodiments will now be described with reference to the drawings. The drawings and the associated descriptions are provided to illustrate the embodiments and not to limit the scope of the invention.
FIG. 1 is an exemplary diagram showing an example of a recorder/reproducer (electronic device) according to an embodiment;
FIG. 2 is an exemplary diagram showing an example of a communication function and program recording in an image formation device according to an embodiment;
FIG. 3 is an exemplary diagram showing an example of a communication function and program recording in the image formation device according to an embodiment;
FIG. 4 is an exemplary diagram showing an example of screen display when the communication function is active in the image formation device according to an embodiment; and
FIG. 5 is an exemplary diagram showing an example of screen display when the communication function is active in the image formation device according to an embodiment.

Various embodiments will be described hereinafter with reference to the accompanying drawings.

In general, according to one embodiment, a communication control method of an electronic device which comprises a communication control function to communicate by at least sound through a network and which is configured to a simultaneously performed additional process, **characterized in that** when the simultaneously performed additional process is performed with the communication, at least one of the image quality of a video signal and the sound quality of an audio signal attached to the communication is reduced to less than a standard value as required after a prior notice.

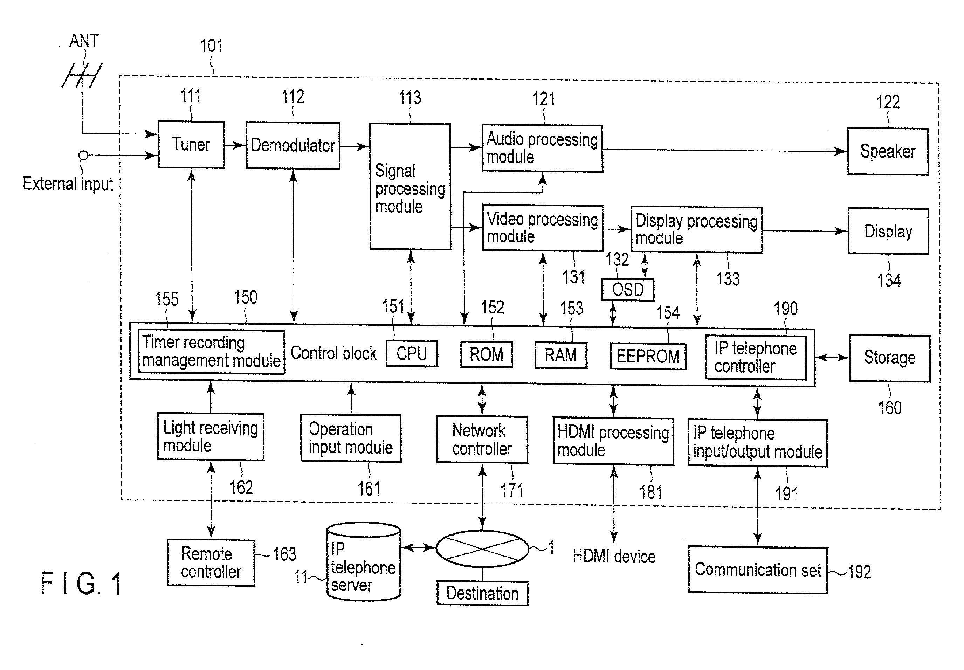

FIG. 1 shows an example of a recorder/reproducer (television receiver) according to the embodiment, and a communication function incorporated in the recorder/reproducer. Components or functions described below may be obtained by hardware or by software using, for example, a microcomputer (CPU or processor).

A television receiver (electronic device, hereinafter referred to as a television) 101 shown in FIG. 1 comprises, for example, a tuner 111, a demodulator 112, a signal processing module 113, an audio processing module 121, a video processing module 131, an OSD processing unit 132, a display processing module 133, a control unit 150, an operation input module 161, and a light receiving unit 162. The television 101 also comprises a speaker 122 and a display 134.

The tuner 111 accepts a broadcast signal received by, for example, an antenna ANT, and tunes in to the broadcast signal (tunes in to a station). The tuner 111 inputs, to the demodulator 112, the broadcast signal of a channel tuned in to. The tuner 111 can also accept the input of a content (program) comprising images and sound as external input. The tuner 111 is capable of simultaneously processing at least two content streams. For example, the tuner 111 can process a program of a given channel provided as radio waves, and high-definition (HD) images input from the external input. The HD images can also be acquired, for example, via a network or a dedicated distribution network.

The demodulator 112 demodulates the broadcast signal of the channel tuned in to or the externally input content. The demodulator 112 inputs the demodulated broadcast signal (content) to the signal processing module 113.

The signal processing module 113 includes, for example, at least a digital signal processor (DSP) for processing content. The signal processing module 113 separates the content from the demodulator 112 into a video signal, an audio signal, and other data, and supplies the audio signal to the audio processing module 121 and supplies the video signal to the video processing module 131. The signal processing module 113 also supplies the separated data to the control unit 150 and/or the OSD processing unit 132.

The audio processing module 121 decodes (converts) the audio signal from the signal processing module 113 to a signal (audio output) in a format reproducible by the speaker 122. The audio processing module 121 supplies the audio output to the speaker 122. The speaker 122 reproduces sound and/or audio corresponding to the audio output. An audio output terminal may be provided instead of the speaker 122.

The video processing module 131 decodes (converts) the video signal received from the signal processing module 113 to a video signal in a format reproducible by the display 134. The video processing module 131 also superimposes, on the video signal, an OSD signal supplied from the OSD processing unit 132. The video processing module 131 outputs the video signal to the display processing module 133.

In accordance with a data signal supplied from the signal processing module 113 and a control signal supplied from the control unit 150, the OSD processing unit 132 generates the OSD signal to superimpose and display, on the screen display, a graphical user interface (GUI) screen display, a caption, time, or other information.

Under the control of the control unit 150, the display processing module 133 adjusts the color, brightness, sharpness, contrast, and other image qualities of, for example, the decoded video signal. The display processing module 133 supplies the display 134 with the video signal after the image quality adjustment. The display 134 displays images (video) corresponding to the supplied video signal.

The display 134 is, by way of example, a liquid crystal display device comprising a liquid crystal display panel, and a backlight to illuminate the liquid crystal display panel. A video output terminal may be provided instead of the display 134.

The control unit 150 is a control unit (control block) which controls the operations of the components of the television 101. The control unit 150 comprises, for example, a CPU (main control unit) 151, a read-only memory (ROM) 152, a random access memory (RAM) 153, an EEPROM (nonvolatile memory) 154, a timer recording management module 155, and an Internet Protocol (IP) telephone controller 190. The timer recording management module 155 and the IP telephone controller 190 may be prepared as firmware of the control unit 150 (CPU 151). The IP telephone controller 190 can form the voice of a user acquired through a microphone of a communication set 192 into a packet, and send the packet to a communication partner connected via the Internet 1, in accordance with an IP telephone program which operates under a prepared program, for example, in accordance with "Skype" which is an Internet telephone provided by Skype Corporation. In should be understood that when the communication set 192 has a camera, the image of the face of the user and the background, for example, can be formed into a packet, and can be sent together with the sound. The control unit 150 includes the reduction of an image bit rate, the reduction of resolution, the reduction of the number of colors, the change of an audio codec algorithm, and the change of a sampling frequency so that at least one of the image quality and the sound quality of the audio signal described later will be lower than a standard value.

In response to an operation input (control signal) by the operation input module 161 or an operation input from a remote controller 163 via the light receiving unit 162, the control unit 150 controls the operations of the components of the television 101.

The CPU 151 has, for example, a computing element which performs various kinds of computing processing, firmware, and a memory area. The CPU 151 executes a program stored in the ROM 152 or the EEPROM 154 and thereby enables various functions.

A program to control the television 101, and programs which enable various functions, for example, are stored in the ROM 152. In accordance with an operation input supplied from the operation input module 161 or the remote controller 163, the CPU 151 starts the program stored in the ROM 152. In this way, the control unit 150 controls the operations of the components.

The RAM 153 functions as a work memory of the CPU 151. For example, computing results by the CPU 151, data read under the control of the CPU 151, and an operation input which is input by the operation input module 161 or the remote controller 163 and information corresponding to (the operation input) are stored in the RAM 153.

For example, various kinds of setting information and programs are stored in the EEPROM 154.

The timer recording management module 155 accepts the setting (input) of timer recording, and stores the setting in, for example, the EEPROM 154. The timer recording management module 155 also counts a clock enabled by the control unit 150 or a clock (CLK) (which may be independently provided), and manages, for example, the start and end of the timer recording set by programming. Moreover, the timer recording management module 155 manages the difference of time (clock) for timer recording in response to time information included in the broadcast signal or an (external) radio wave clock.

The IP telephone controller 190 enables, for example, as an IP telephone connected via the Internet 1, a communication function capable of audio communication or communication including images (video or moving images) using Internet Protocol (IP).

Storage 160 has a storage medium for storing content. The storage 160 is capable of recording (writing) in and reproducing (reading) from, for example, a hard disk drive (HDD) or a semiconductor memory (memory card), and stores recording streams or audio data acquired by the signal processing module 113. For the storage by the storage 160, data is processed (compressed/uncompressed, coded) on the RAM 153 under the control of the CPU 151, and processing conforming to a storage format is performed. An exclusive encoder, decoder, and codec may be provided. The storage 160 is also capable of recording and reproducing high-definition (HD) images. However, the storage 160 may occupy a great amount of system resources of the control unit 150 when recording and reproducing HD images.

The operation input module 161 includes various input devices for generating operation signals in response to the operation input by, for example, operation keys, a Universal Serial Bus (USB)-connected keyboard, or a tablet computer. In accordance with the operation signal generated in the operation input module 161 in response to the operation input, the control unit 150 outputs control signals to target components. When the television 101 comprises the display 134, a touch panel formed integrally with the display 134 can be also used as the operation input module 161.

The light receiving unit 162 receives an operation input, for example, by the remote controller 163, and supplies the operation input to the control unit 150. The control unit 150 inputs, to the CPU 151, an operation signal corresponding to the operation input from the light receiving unit 162. The remote controller 163 may be configured to perform infrared communication with the light receiving unit 162, or may be configured to perform other wireless communication, for example, by radio waves having a predetermined frequency.

A network controller 171 controls the transfer of data (content) to/from various communication partners via the Internet 1 (connectable via the Internet 1), and data for the above-mentioned communication function that uses the IP telephone controller 190.

An HDMI processing module 181 transfers control signals, video data, and audio data in conformance with the HDMI (registered trademark) standard (i.e. High-Definition Multimedia Interface [HDMI]). The HDMI processing module 181 is capable of transmitting and receiving streams including images and sound to and from an external device comprising an HDMI terminal or a high-capacity memory (externally attached HDD). The external device includes, for example, Blu-ray (registered trademark) recorder, a Digital Versatile Disk (DVD) recorder, a hard disk (HDD) recorder, a device (HDMI device) compliant with other devices and the HDMI standard, or a network attached storage (NAS). The television 101 can comprise other interfaces such as a LAN terminal connectable to, for example, Serial-Advanced Technology Attachment (Serial-ATA) or HDMI Ethernet channel (HDMI-HEC).

The IP telephone controller 190 assigns, to the respective components, the processing of images of the face of the user and its surroundings acquired by the camera of the communication set 192 and the voice of the user acquired by the microphone via an IP telephone input/output module 191 to enable the communication function performed by the Internet 1 through the network controller 171. For example, video data is coded and compressed in conformance with the signal processing of images recorded in the storage 160. Audio data is also coded and compressed in conformance with the signal processing of the images recorded in the storage 160. A received telephone call is separated to audio data and video data, which are then decoded. An audio output is output to earphones or a speaker unit (for example, headphones) with ear pads of the communication set 192. Video output is displayed in a predetermined region within the screen display of the display 134.

In the meantime, for example, when the recording of high-definition (HD) images is simultaneous with the use of the IP telephone including moving images (i.e., video, a conflict of resource use), the function of the IP telephone may be restricted in association with the inhibition of a cost increase caused by the increase of the system resources. For example, the rate of system resource use considerably increases during HD recording in which full high-definition content having a resolution of 1920×1080(i) pixels and an audio sampling frequency of 48 kHz are recorded without the change of image quality and sound quality. When two programs comprising high-definition content having a resolution of 1380×1080 pixels and an audio sampling frequency of 18 kHz are simultaneously recorded (multiple recording), it can be predicted that there is almost no surplus of system resources.

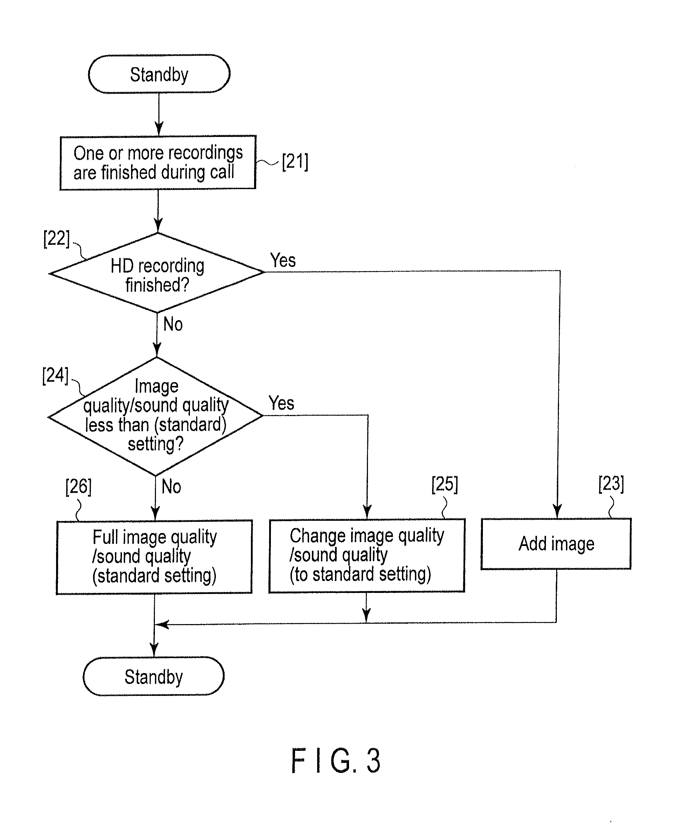

Against such a background, when the IP telephone has received a telephone call, the recording of content is detected [12-Yes] at the start of the telephone call (response) [11], for example, as shown in FIG. 3. When more than one recordings are detected [13-Yes], the received IP telephone call can be transferred to, for example, a mobile terminal of the user. When (the user carries the mobile terminal) [14-Yes], it is preferable that the IP telephone call is received by the mobile terminal and used by equipment other than the television 101 [20]. On the other hand, when the received IP telephone call can be transferred to the mobile terminal of the user but the connection is difficult (the user does not carry the mobile terminal) [14-No], the response (connection) to the received IP telephone call is temporarily held (suspended), for example, by message recording which is a function of the mobile terminal [19]. In this case, the reception of the telephone call is preferably recorded.

If one content is being recorded [13-No], the quality of moving images (still image) or the quality of sound (speech quality) of the received IP telephone call is suppressed within given conditions (the image quality and/or sound quality is reduced to less than a standard rate) except when an HD content is being recorded (HD recording), and it is thereby possible to respond to the IP telephone call at the same time [17]. On the other hand, when an HD content is being recorded (HD recording) [15-Yes], the reproduction of the moving images of the IP telephone call is canceled and sound is only reproduced so that it is possible to respond to the IP telephone call [18].

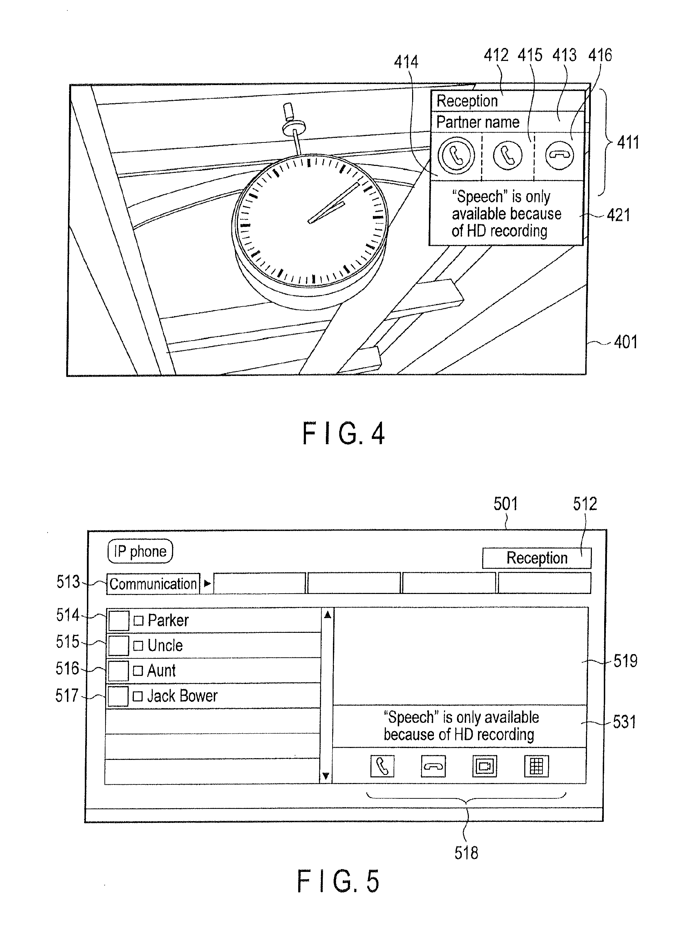

In this case, a message (alert) corresponding to the use of the system resources by the content being recorded, such as "An IP telephone call is received but speech is only available" is displayed at a predetermined position of the screen display shown in FIG. 4 in which the content being recorded is displayed, for example, in a text display region 421 of a "reception display region" 411. In this way, it is possible to report to the user that the function of the IP telephone is restricted. Indications in the "reception display region" 411 in FIG. 4 are illustrative only, and include, for example, a "reception display" 412 indicating to the user that an IP telephone call is received, a "partner display" 413 indicating a transmission source or a partner, and a "response display <1>" 414, a "response display <2>" 415, and a "response display <3>" 416 that indicate how to respond. The "response display <1>" 414 indicates a response with images, the "response display <2>" 415 indicates a response with sound alone, and the "response display <3>" indicates not to respond.

For example, the restriction of the use of the IP telephone includes:
1) changing (degrading) the quality, resolution, and bit rate of an image to be transmitted,
2) changing (degrading) the image quality, resolution, and bit rate during the reproduction of a received image,
3) changing (degrading) the quality of sound to be transmitted,
4) changing (degrading) the quality during the reproduction of received sound,
5) stopping the transmission of an image and setting (continuing) speech, and
6) stopping the reproduction of a received image and setting (continuing) speech.

When an IP telephone call is received during the recording of the above-mentioned HD content, the following screen displays are indicated in a "call screen" 501 as shown by way of example in FIG. 5: a "mode display" 511 indicating that an IP telephone mode is started, an "on-call display" 512 indicating that an on-call state (standby for a call), "telephone directory (partner list) displays" 513 to 517, an "operation display" 518 indicating, for example, the operation of the camera, "image displays" 519 and 520 indicating the images of the faces of the partners and the user, and a message display area 531. In this case, the "image displays" 519 and 520 indicating the images of the faces of the partners and the user are not indicated (no images, for example, [full black display]). A message (alert) corresponding to the use of the system resources based on the content being recorded, such as "An IP telephone call is received but speech is only available because HD content is being recorded." is displayed in the message display area 531.

When the start time of "timer recording" based on programming has come (or is coming near) during the IP telephone call, a message (alert) corresponding to the use of the system resources associated with the start of the recording of the content, such as "Programmed recording is started / speech is only available on IP telephone" is displayed in the message display area 531. The display of the message is preferably one to several minutes earlier than the start time of the recording. That is, it is possible to finish the IP telephone call or change to a telephone call that uses the mobile terminal in association with the restriction of the use of the IP telephone resulting from the start of the recording.

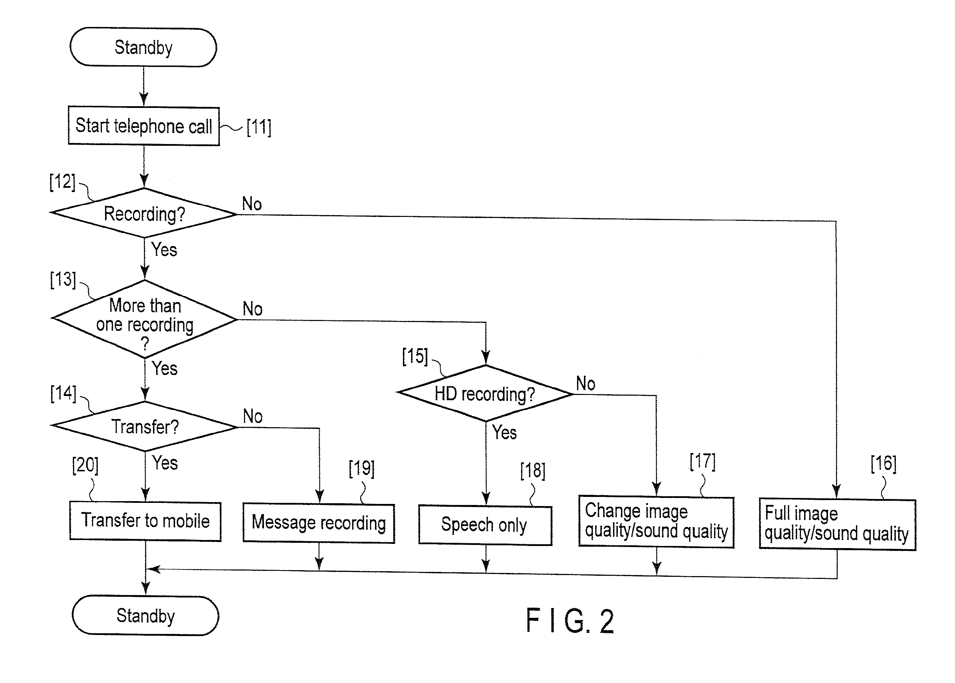

The recording content and the restriction of the use of the IP telephone at the start of the "timer recording" based on programming are judged by [13] to [15] in FIG. 2.

The start time of the "timer recording" based on programming is set (input) in advance. Therefore, it is possible to use the message display to indicate that the transmission or reception of images becomes impossible a given time earlier than the scheduled start time (the content to be recorded is an HD content), or that the image quality and/or the sound quality of the call will be reduced to less than standard setting.

That is, when processing that imposes a load on the system increases during an IP telephone call with images, it is possible to use the message display to indicate, for example, that the image quality will change (degrade) or that the transmission or reception of images becomes impossible. For example, when the processing that imposes a load on the system has started or is scheduled to be started soon during a telephone call, it is possible to report to the user that the image quality and/or the sound quality of the call will be reduced to less than the standard setting a given time earlier.

If the recording is finished during the call using the IP telephone the use of which is restricted during the recording of the content, the end of one or more recordings is detected [21] as shown by way of example in FIG. 3. When the finished recording is HD recording [22-Yes], the images of the partner and the user are displayed in the "image displays" 519 and 520 shown in FIG. 5 [23]. At the same time, a message "Timer recording has finished / IP telephone images are reproduced", for example, may be indicated in the message display area 531.

If the recording finished during the call using the IP telephone the use of which is restricted during the recording of the content is recording other than HD recording [22-No], the image quality and/or the sound quality (call setting) are restored to the standard setting [25] when the use of the IP telephone currently online is restricted to less than the standard setting of the image quality and/or the sound quality [24-Yes]. When the content being recorded does not affect the quality of the IP telephone call (the content is recorded in a long-time mode and the IP telephone call can be established with the standard setting of the image quality and/or the sound quality), the IP telephone call is carried on [26]. The end time of the "timer recording" based on programming is set (input) in advance. Therefore, it is possible to use the message display to indicate that images can be added a given time earlier than the scheduled end time (the content being recorded is an HD content), or that the image quality and/or the sound quality of the call will be restored (enhanced) (to the standard setting).

That is, when the processing that imposes a load on the system ends during an IP telephone call with images, it is possible to use the message display to indicate, for example, that the image quality will be improved. For example, when the end or scheduled end time of the processing that imposes a load on the system during the call is known in advance, it is possible to report to the user a given time earlier that the image quality and/or the sound quality of the call will be restored (enhanced) to the standard setting.

Consequently, it is possible to provide a recorder/reproducer and a video/audio output control method which inhibits a cost increase caused by the increase of the system resources and prevents the considerable surplus of the system resources during normal use and which enables the communication function (IP telephone) capable of communication with moving images and the recording of programs.

## Claims

1. A communication control method of an electronic device (101) which comprises a communication control function to communicate by at least sound through a network and which is configured to a simultaneously performed additional process,
**characterized in that**
when the simultaneously performed additional process is performed with the communication, at least one of the image quality of a video signal and the sound quality of an audio signal attached to the communication is reduced to less than a standard value as required after a prior notice.

2. The communication control method of claim 1,
**characterized in that**
the simultaneously performed additional process comprises recording of broadcast content.

3. The communication control method of claim 1 or 2,
**characterized in that**
in order to allow the simultaneously performed additional process to be simultaneously performed, the communication control function further stops at least one of the transmission and reception of the video signal attached to the communication performed by the communication control means as required after a prior notice.

4. The communication control method of any one of claims 1 to 3,
**characterized in that**
the communication control function further comprises a function which transfers the communication to another device as required when the simultaneously performed additional process are unmanageable in parallel.

5. The communication control method of any one of claims 1 to 4,
**characterized in that**
a function is provided to return at least one of the image quality of the video signal and the sound quality of the audio signal attached to the communication performed by the communication control function to the standard value, if at the end of the simultaneously performed additional process when the image quality or the sound quality is reduced to less than the standard value.

6. The communication control method of claim 5,
**characterized in that**
a function is provided to report the return of at least one of the image quality of the video signal and the sound quality of the audio signal attached to the communication performed by the communication control function to the standard value when the image quality or the sound quality is reduced to less than the standard value.

7. The communication control method of any one of claims 1 to 6,
**characterized in that**
notify function configured to report the reduction to less than the standard value, the stopping of image transmission and reception, and the return to an original condition in response to the end of the simultaneously performed additional process, a given time earlier than a time of the start or end of the simultaneously performed additional process when this start or end time is known in advance.

8. The communication control method of any one of claims 1 to 7,
**characterized in that**
reducing function including at least one of the image quality and the sound quality of the audio signal to less than the standard value includes the reduction of an image bit rate, the reduction of resolution, the reduction of the number of colors, the change of an audio codec algorithm, and the change of a sampling frequency.
